# EUROPÄISCHE PATENTSCHRIFT

(11) **EP 0 916 030 B1**
(45) Veröffentlichungstag und Bekanntmachung des Hinweises auf die Patenterteilung: **19.09.2001**
(21) Anmeldenummer: 97938832.9
(22) Anmeldetag: 18.07.1997
(51) Int. Cl.: F16B 25/00, F16B 33/02

(54) **SELBSTSCHNEIDENDE SCHRAUBE, INSBESONDERE BETONSCHRAUBE**
SELF-CUTTING SCREW, IN PARTICULAR CONCRETE SCREW
VIS AUTOTARAUDEUSE, NOTAMMENT VIS POUR BETON

(30) Priorität: 29.07.1996 DE 29612936 U; 08.03.1997 DE 29704226 U
(43) Veröffentlichungstag der Anmeldung: 19.05.1999
(73) Patentinhaber: TOGE-Dübel A. Gerhard KG, 90431 Nürnberg (DE)
(72) Erfinder: GERHARD, Anton, D-90427 Nürnberg (DE)
(74) Vertreter: Rau, Manfred, Dr. Dipl.-Ing.
(86) Internationale Anmeldenummer: EP9703867
(87) Internationale Veröffentlichungsnummer: WO9804842

(56) Entgegenhaltungen:
- EP-A- 0 433 484
- US-A- 4 850 775

## Beschreibung

Die Erfindung betrifft eine selbstschneidende Schraube nach dem Oberbegriff des Anspruches 1.

Aus der EP 0 623 759 B1 ist eine Gewinde schneidende Schraube bekannt, bei der das Verhältnis von Außendurchmesser zu Kerndurchmesser etwa 1,25 - 1,5, das Verhältnis von Außendurchmesser zu Steigung des Gewindes etwa 1,5 - 1,6 und der Flankenwinkel des Gewindes < 50 ° und ≥ 35 ° ist.

Aus der EP 0 433 484 B1 ist eine Gewinde schneidende Schraube bekannt, deren Gewinde mit Schneidzähnen versehen ist, die etwa bugförmig ausgebildet sind, wobei die mittlere Schneidkante in der Ebene des Gewindegrates verläuft und negativ angestellt ist.

Der Erfindung liegt die Aufgabe zugrunde, eine selbstschneidende Schraube der gattungsgemäßen Art so auszugestalten, daß sie besonders leichtgängig in Bohrungen in Beton, aber auch in anderen Materialien wie Ziegel oder dergleichen einschraubbar ist.

Diese Aufgabe wird erfindungsgemäß durch die Merkmale im Kennzeichnungsteil des Anspruches 1 gelöst. Überraschenderweise hat sich gezeigt, daß durch die Parallelanordnung der Flanken, also bei einem Flankenöffnungswinkel von etwa 0 °, sich die Schraube besonders leichtgängig einschrauben läßt, und zwar insbesondere auch bei im Bereich der zulässigen Toleranzen schwankenden Bohrungsdurchmessern. Ein Grund mag darin liegen, daß auch bei unterschiedlich tiefem Einschneiden des Gewindes in den Beton oder das sonstige Material, wie Ziegel, Spanplatten oder Hartholz, keine Pressung der Flanken zum Werkstoff auftritt, in den die Schraube eingedreht wird. Durch die Schneid-Kerben wird das Gewinde über seine volle Breite in das Material eingeschnitten. Insbesondere die Ausgestaltung nach Anspruch 3 führt dazu, daß das beim Eindrehen der Schraube herausgeschnittene Material ohne Rückstau nach außen abgefördert wird. Die Unteransprüche geben zahlreiche vorteilhafte Weiterbildungen wieder.

Weitere Merkmale, Vorteile und Einzelheiten der Erfindung ergeben sich aus der Beschreibung von Ausführungsbeispielen anhand der Zeichnung. Es zeigen
- Fig. 1: eine Draufsicht auf eine Betonschraube mit leicht verjüngtem Anfang,
- Fig. 2: eine Draufsicht auf eine Betonschraube mit stark verjüngtem Anfang,
- Fig. 3: eine Draufsicht auf einen Teil einer Betonschraube in gegenüber Fig. 1 vergrößerter Darstellung,
- Fig. 4: einen Querschnitt durch das Gewinde gemäß der Schnittlinie IV-IV in Fig. 3,
- Fig. 5: eine Seitenansicht eines Gewindes gemäß dem Sichtpfeil V in Fig. 3 und
- Fig. 6: einen Querschnitt durch eine abgewandelte Ausführungsform des Gewindes in einer Fig. 4 entsprechenden Darstellung.

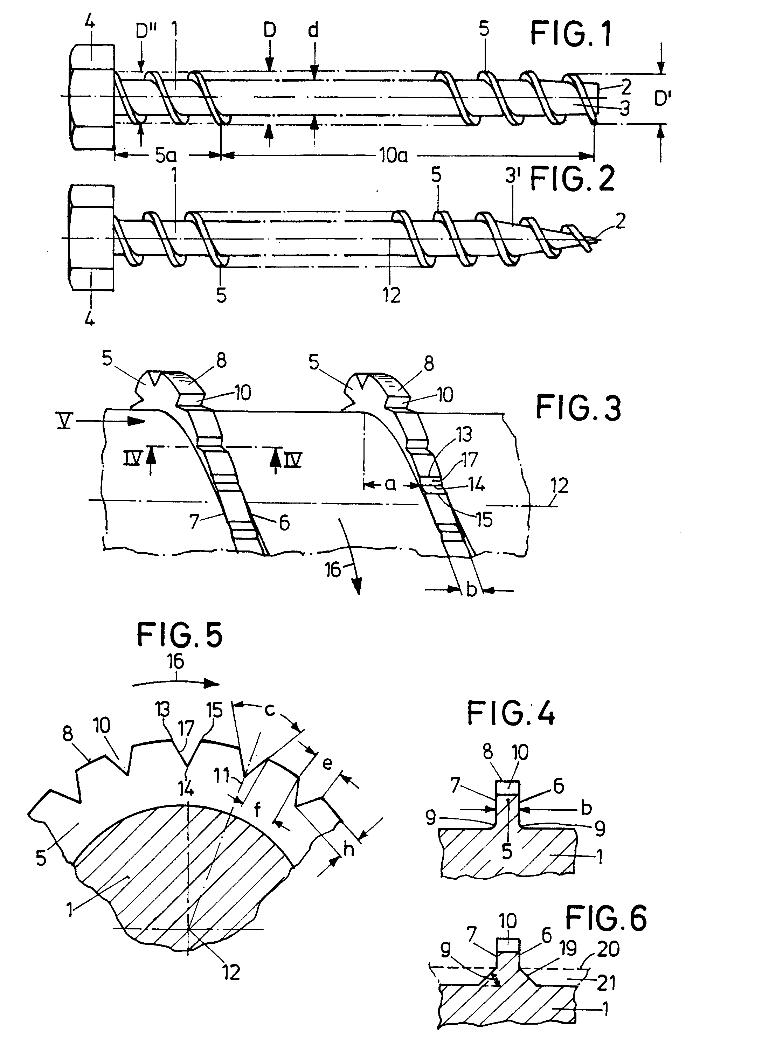

Die in Fig. 1 dargestellte Schraube weist einen zylindrischen Kern 1 auf, der im Bereich das Anfangs 2 einen leicht verjüngten Abschnitt 3 aufweist. Am Ende des Kerns ist ein beliebig auszubildender Schraubenkopf 4 ausgebildet. Auf dem zylindrischen Kern 1 einschließlich des verjüngten Abschnitts 3 ist ein stegartig ausgebildetes Gewinde 5 ausgeformt, dessen Außendurchmeser D 1,0 - 2,5 mm größer ist als der Nenndurchmesser einer Bohrung, in die die Schraube eingeschraubt werden soll. Der Nenndurchmesser einer Bohrung ist international genormt, beträgt also 4, 5, 6, 8, 10, 12, 14, 16 ... mm.

Das Maß, um das der Außendurchmesser D größer ist als der Nenndurchmesser der Bohrung nimmt mit dem Nenndurchmesser der Bohrung zu. Am Anfang 2 des verjüngten Abschnitts 3 ist der Außendurchmesser D' des Gewindes 5 um ein geringes Maß von 0,1 - 0,2 mm kleiner als der Nenndurchmesser der Bohrung, damit ein einwandfreies Einführen nicht nur des Anfangs 2 der Schraube, sondern auch des ersten oder der ersten beiden Gewindegänge in ein Bohrloch möglich ist. Im Anschluß an diesen ersten oder die ersten beiden Gewindegänge sind ein bis zwei Gewindegänge als Übergang auf das Gewinde 5 mit dem Außendurchmesser D vorgesehen. Das Gewinde 5 weist diesen Außendurchmesser D über zwei bis vier Gewindegänge auf. Im Anschluß daran wird der Außendurchmesser D wieder um 0,1 - 0,2 mm auf einen Außendurchmesser D" reduziert, behält also naturgemäß ein Übermaß gegenüber dem Nenndurchmesser des Bohrlochs.

Insgesamt wird also das Gewinde 5 durch eine etwa ballige Kurve eingehüllt. Im Bereich benachbart zum Schraubenkopf 4 muß nicht zwingend ein Gewinde 5 vorhanden sein; dies gilt insbesondere für verhältnismäßig lange Schrauben.

Bei der Ausführung nach Fig. 2 ist der verjüngte Abschnitt 3' des Kerns 1 zum Anfang 2 hin zu einer Spitze gezogen.

Wie aus Fig. 4 hervorgeht, hat das Gewinde 5 einen angenähert rechteckigen Querschnitt, das heißt die Flanken 6, 7 verlaufen parallel zueinander. Dies schließt ein, daß die Flanken 6, 7 einen Winkel von 1 ° bis maximal 2 ° einschließen, um ein Herauslösen des Gewindes 5 bei der Herstellung aus dem Herstellungswerkzeug zu ermöglichen. Ein solcher winziger Flankenwinkel hat ausschließlich herstellungstechnische Gründe. Die Außenfläche 8 des Gewindes 5 entspricht einer Schraubenfläche auf einem Zylinder, soweit das Gewinde 5 dem zylindrischen Kern 1 zugeordnet ist. Die Breite b des Gewindes 5, das heißt der kürzeste Abstand b der Flanken 6, 7 voneinander, ist im Bereich von 0,4 - 1,5 mm, insbesondere 0,4 - 1,0 mm, und zwar auch wiederum in Abhängigkeit vom Nenndurchmesser der Bohrung.

Die Flanken 6, 7 gehen mit kleinen Abrundungen 9 in den Kern 1 über. Der Steigungswinkel a des Gewindes 5 liegt im Bereich von 15 bis 30 ° und bevorzugt im Bereich von 18 bis 26 °. Der Kerndurchmesser d ist um 0,2-0,8 mm kleiner als der Nenndurchmesser einer zugehörigen Bohrung.

In die Außenfläche 8 des Gewindes 5 sind Schneid-Kerben 10 eingeformt, und zwar über einen Schneiden-Abschnitt 10a, der sich vom Anfang 2 bis dorthin erstreckt, wo der Außendurchmesser D des Gewindes 5 in einen reduzierten Außendurchmesser D" übergeht. Dieser letztgenannte Abschnitt des Gewindes 5 ist also ein nichtschneidender Gewinde-Abschnitt 5a. Die Schneid-Kerben 10 weisen in der Seitenansicht gemäß Fig. 5 die Form eines gleichschenkligen Dreiecks mit einem Spitzenwinkel c auf, der im Bereich von 50 bis 90 ° und bevorzugt bei 60 ° liegt. Die Spitzenwinkelhalbierende des Winkels c wird jeweils durch einen Radius 11 zur Mittel-Längs-Achse 12 des Kerns 1 gebildet. Die Längskanten 13, 14, 15 der Schneid-Kerben 10, das heißt die beiden Längskanten 13, 15 am Übergang zur Außenfläche 8 und die Längskante 14 bei dem Spitzenwinkel c verlaufen parallel zur Achse 12. Die - bezogen auf die Einschraubrichtung 16-nacheilende Längskante 13 ist eine Schneidkante. Die zwischen dieser Schneidkante 13 und der am Grund der Kerbe 10 verlaufenden Längskante 14 gebildete Fläche ist eine Abtransport-Fläche 17. Die radiale Höhe h der Schneid-Kerben 10 liegt im Bereich von 0,1 - 0,4 mm und bevorzugt im Bereich von 0,2 - 0,3 mm und zwar wiederum in Abhängigkeit vom Nenndurchmesser der Bohrung.

Die Schneid-Kerben 10 sind in gleichmäßigen Abstand voneinander im Gewinde 5 ausgebildet, wobei für ihre Außenumfangs-Erstreckung e in Umfangsrichtung im Vergleich zu ihrem Außenumfangs-Abstand f gilt e ≤ f ≤ 3 e.

In dem Ausführungsbeispiel nach Fig. 6 gehen die Flanken 6, 7 mittels einer Fase 19 in den Kern 1 über, wobei der Fasenwinkel g etwa 45 ° beträgt. In Fig. 6 ist gestrichelt eine Bohrlochwand 20 angedeutet, wobei erkennbar ist, daß die Fase 19 sich zumindest im wesentlichen im Bereich zwischen dem Kern 1 und der Bohrlochwand 20 befindet. Zwischen dem Kern 1 und der Bohrlochwand 20 ist eine Kammer 21 gebildet, durch die das beim Einschrauben der Schraube herausgeschnittene Material abtransportiert wird. Diese Kammern 21 müssen möglichst groß sein; der Kerndurchmesser d ist demzufolge entsprechend klein. Diese Fasen 19 sind ausschließlich aus festigkeitstechnischen Gründen vorgesehen, da zwischen der Bohrlochwand 20 und dem Kern 1 keine Schneidarbeit zu leisten ist und da in diesem Bereich auch keine Reibung zwischen den Flanken 6, 7 des Gewindes 5 und der zu schneidenden Wand auftritt.

In der nachfolgenden Tabelle sind für die üblichen international genormten Bohrungs-Nenndurchmesser (Spalte I) die zugehörigen Gewinde-Außendurchmesser D im schneidenden Gewinde-Abschnitt 10a (Spalte II), die Kerndurchmesser d (Spalte III) und die zugehörige radiale Höhe h der Schneid-Kerben 10 (Spalte IV) dargestellt. Aus dieser Tabelle ergibt sich, daß der Gewinde-Außendurchmesser D um 1,5 - 3,5 mm größer ist als der Bohrungs-Nenndurchmesser, und zwar zunehmend mit dem Bohrungs-Nenndurchmesser. Auch die radiale Höhe der Schneid-Kerben 10 nimmt zu, und zwar von 0,2 - 0,8 mm. Das Untermaß des Kerndurchmessers d gegenüber dem Bohrungs-Nenndurchmesser beginnt bei 0,8 - 1,2 mm für einen Bohrungs-Nenndurchmesser von 5 mm und steigt bis auf 1,2 - 1,6 mm bei Bohrungs-Nenndurchmessern ab 12 mm aufwärts. Der reduzierte Außendurchmesser D" im nichtschneidenden Gewindeabschnitt 5a ist um 0,1 - 0,3 mm kleiner als der Gewinde-Außendurchmesser D gemäß Spalte II.

Die Schneid-Kerben 10 müssen nicht den Querschnitt eines gleichschenkligen Dreiecks aufweisen; auch können die zwischen den Längskanten 13, 14 ausgebildeten Transport-Flächen und die zwischen den Längskanten 14, 15 ausgebildeten Flächen leicht gekrümmt verlaufen, was sich aus herstellungstechnischen Gründen ergeben kann. Im übrigen gelten für das Ausführungsbeispiel nach Fig. 6 die obigen Angaben.

| Spalte I | Spalte II | Spalte III | Spalte IV |
|---|---|---|---|
| 5 | 6,5 - 6,8 | 3,8 - 4,2 | 0,2 - 0,5 |
| 6 | 7,5 - 7,8 | 4,8 - 5,2 | 0,3 - 0,6 |
| 8 | 10,5 - 10,8 | 6,6 - 7,0 | 0,4 - 0,7 |
| 10 | 13,0 - 13,5 | 8,6 - 9,0 | 0,5 - 0,8 |
| 12 | 15,0 - 15,5 | 10,4 - 10,8 | 0,5 - 0,8 |
| 14 | 17,0 - 17,5 | 12,4 - 12,8 | 0,5 - 0,8 |
| 16 | 19,0 - 19,5 | 14,4 - 14,8 | 0,5 - 0,8 |
| Spalte I = Bohrungs-Nenndurchmesser [mm] | | | |
| Spalte II = Gewinde-Außendurchmesser [mm] | | | |
| Spalte III = Kerndurchmesser [mm] | | | |
| Spalte IV = Radiale Höhe der Schneid-Kerben [mm] | | | |

## Patentansprüche

1. Gewindeschneidende Schraube, insbesondere Betonschraube,
mit einem im wesentlichen zylindrischen Kern (1) mit einer Mittel-Längs-Achse (12),
mit einem einstückig mit dem Kern (1) ausgebildeten Gewinde (5) mit Flanken (6, 7) und
mit im Bereich des Außenumfangs des Gewindes (5) angeordneten, in Form von zum Außenumfang hin offenen Dreiecken ausgebildeten Schneid-Kerben (10),
**dadurch gekennzeichnet,**
**daß** die Flanken (6, 7) radial zur Mittel-Längs-Achse (12) im wesentlichen parallel zueinander verlaufen.

2. Schraube nach Anspruch 1, **dadurch gekennzeichnet, daß** das Gewinde (5) an seinem Außenumfang mit einer im wesentlichen auf einer Zylinderfläche liegenden Außenfläche (8) versehen ist.

3. Schraube nach Anspruch 1 oder 2, **dadurch gekennzeichnet, daß** die Schneid-Kerben (10) am Übergang zur Außenfläche (8) Längskanten (13, 15) und im Grund eine Längskante (14) aufweisen, die im wesentlichen parallel zur Mittel-Längs-Achse (12) verlaufen.

4. Schraube nach einem der Ansprüche 1 bis 3, **dadurch gekennzeichnet, daß** der Steigungswinkel a des Gewindes (5) 15 bis 30 ° und bevorzugt 18 bis 26 ° beträgt.

5. Schraube nach einem der Ansprüche 1 bis 4, **dadurch gekennzeichnet, daß** der Außendurchmesser D des Gewindes (5) 1,0 - 2,5 mm größer ist als der Nenndurchmesser einer zugehörigen Bohrung.

6. Schraube nach einem der Ansprüche 1 bis 5, **dadurch gekennzeichnet, daß** sie an ihrem Anfang (2) einen verjüngten Abschnitt (3, 3') der Kerns (1) aufweist, auf dem das Gewinde (5) einen Außendurchmesser D' aufweist, der 0,1 - 0,2 mm kleiner als der Nenndurchmesser einer zugehörigen Bohrung ist.

7. Schraube nach einem der Ansprüche 1 bis 6, **dadurch gekennzeichnet, daß** der Kerndurchmesser d 0,2 - 0,8 mm kleiner ist als der Nenndurchmesser einer zugehörigen Bohrung.

8. Schraube nach einem der Ansprüche 1 bis 7, **dadurch gekennzeichnet, daß** benachbarte Schneid-Kerben (10) einen Außenumfangs-Abstand f aufweisen, für den in Bezug auf eine Außenumfangs-Erstreckung e der Schneid-Kerben gilt e ≤ f ≤ 3 e.

9. Schraube nach einem der Ansprüche 1 bis 8, **dadurch gekennzeichnet, daß** die radiale Höhe h der Schneid-Kerben (10) 0,1 - 0,4 mm und bevorzugt 0,2 - 0,3 mm beträgt.

10. Schraube nach einem der Ansprüche 1 bis 9, **dadurch gekennzeichnet, daß** der Außendurchmesser D des Gewindes (5) zu einem Schraubenkopf (4) hin um 0,1 - 0,2 mm reduziert ist.

11. Schraube nach einem der Ansprüche 1 bis 4 und 6 bis 10, **dadurch gekennzeichnet, daß** der Außendurchmesser D des Gewindes (5) 1,5- 3,5 mm größer ist als der Nenndurchmesser einer zugehörigen Bohrung.

12. Schraube nach einem der Ansprüche 1 bis 6 und 8 bis 11, **dadurch gekennzeichnet, daß** der Kerndurchmesser d 0,8 - 1,6 mm kleiner ist als der Nenndurchmesser einer zugehörigen Bohrung.

13. Schraube nach einem der Ansprüche 1 bis 8 und 10 bis 12, **dadurch gekennzeichnet, daß** die radiale Höhe h der Schneid-Kerben (10) 0,2 - 0,8 mm beträgt.

14. Schraube nach einem der Ansprüche 1 bis 13, **dadurch gekennzeichnet, daß** die Schneid-Kerben (10) den Querschnitt eines gleichschenkligen Dreiecks haben.

15. Schraube nach einem der Ansprüche 1 bis 14, **dadurch gekennzeichnet, daß** die Schneid-Kerben (10) einen Spitzenwinkel c haben, für den gilt 50 ° ≤ c ≤ 90 ° und bevorzugt c ≈ 60 °.

16. Schraube nach einem der Ansprüche 1 bis 15, **dadurch gekennzeichnet, daß** die Breite b des Gewindes (5) 0,4 - 1,5 mm, insbesondere 0,4-1,0 mm, beträgt.

## Claims

1. A self-tapping screw, in particular a concrete screw, comprising
a substantially cylindrical core (1) having a central longitudinal axis (12);
a thread (5) with flanks (6, 7) which is formed in a single piece with the core (1); and
cutting notches (10) disposed in the vicinity of the periphery of the thread (5) and designed in the shape of triangles open towards the periphery,
**characterized in**
**that** the flanks (6, 7) extend substantially in parallel to each other radially to the central longitudinal axis (12).

2. A screw according to claim 1, **characterized in that** on its periphery, the thread (5) is provided with an outer surface (8) lying substantially on a surface of a cylinder.

3. A screw according to claim 1 or 2, **characterized in that** the cutting notches (10) have lengthwise edges (13, 15) at the transition to the outer surface (8) and a lengthwise edge (14) at the root, which are substantially parallel to the central longitudinal axis (12).

4. A screw according to one of claims 1 to 3, **characterized in that** the lead angle a of the thread (5) amounts to 15 to 30° and preferably 18 to 26°.

5. A screw according to one of claims 1 to 4, **characterized in that** the major diameter D of the thread (5) exceeds the nominal diameter of an associated drill hole by 1.0 - 2.5 mm.

6. A screw according to one of claims 1 to 5, **characterized in that** at its end (2) to be inserted, it comprises a tapered section (3, 3') of the core (1), along which the thread (5) has a major diameter D' which is smaller than the nominal diameter of an associated drill hole by 0.1 - 0.2 mm.

7. A screw according to one of claims 1 to 6, **characterized in that** the core diameter d is smaller than the nominal diameter of an associated drill hole by 0.2 - 0.8 mm.

8. A screw according to one of claims 1 to 7, **characterized in that** neighboring cutting notches (10) have a peripheral distance f to which e ≤ f ≤ 3e applies in relation to a peripheral extension e of the cutting notches.

9. A screw according to one of claims 1 to 8, **characterized in that** the radial height h of the cutting notches (10) is 0.1 - 0.4 mm, and preferably 0.2 - 0.3 mm.

10. A screw according to one of claims 1 to 9, **characterized in that** the major diameter D of the thread (5) is reduced by 0.1 - 0.2 mm towards a screw head (4).

11. A screw according to one of claims 1 to 4 and 6 to 10, **characterized in that** the major diameter D of the thread (5) exceeds the nominal diameter of an associated drill hole by 1.5 - 3.5 mm.

12. A screw according to one of claims 1 to 6 and 8 to 11, **characterized in that** the core diameter d is smaller than the nominal diameter of an associated drill hole by 0.8 - 1.6 mm.

13. A screw according to one of claims 1 to 8 and 10 to 12, **characterized in that** the radial height h of the cutting notches (10) is 0.2 - 0.8 mm.

14. A screw according to one of claims 1 to 13, **characterized in that** the cutting notches (10) have the cross-sectional shape of an isosceles triangle.

15. A screw according to one of claims 1 to 14, **characterized in that** the cutting notches (10) have an apex angle c to which 50° ≤ c ≤ 90°, and preferably c ≈ 60°, applies.

16. A screw according to one of claims 1 to 15, **characterized in that** the width b of the thread (5) is 0.4 - 1.5 mm, in particular 0.4 - 1.0 mm.

## Revendications

1. Vis autotaraudeuse, en particulier vis à béton, comprenant un noyau sensiblement cylindrique (1) avec un axe central longitudinal (12) ,
comportant un pas de vis (5) formé d'une seule pièce avec le noyau (1) et présentant des flancs (6, 7) et
comportant des entailles de coupe (10) agencées dans la région de la périphérie extérieure du pas de vis (5) et réalisées sous la forme de triangles ouverts vers la périphérie extérieure,
**caractérisée en ce que** les flancs (6, 7) s'étendent sensiblement parallèlement l'un à l'autre et radialement par rapport à l'axe central longitudinal (12).

2. Vis selon la revendication 1, **caractérisée en ce que** le pas de vis (5) est pourvu sur sa périphérie extérieure d'une surface extérieure (8) située sensiblement sur une surface cylindrique.

3. Vis selon l'une ou l'autre des revendications 1 et 2, **caractérisée en ce que** les entailles de coupes (10) comportent des arêtes longitudinales (13, 15) au niveau de la transition vers la surface extérieure (8) et une arête longitudinale (14) dans le fond, lesquelles s'étendent sensiblement parallèlement à l'axe central longitudinal (12) .

4. Vis selon l'une des revendications 1 à 3, **caractérisée en ce que** l'angle a du pas de vis (5) est compris entre 15 et 30°, et de préférence entre 18 et 26°.

5. Vis selon l'une des revendications 1 à 4, **caractérisée en ce que** le diamètre extérieur (D) du pas de vis (5) est supérieur de 1,0 à 2,5 mm au diamètre nominal d'un perçage associé.

6. Vis selon l'une des revendications 1 à 5, **caractérisée en ce qu'**elle comporte au commencement (2) un tronçon rétréci (3, 3') du noyau (1), sur lequel le pas de vis (5) présente un diamètre extérieur D' qui est de 0,1 à 0,2 mm inférieur au diamètre nominal d'un perçage associé.

7. Vis selon l'une des revendications 1 à 6, **caractérisée en ce que** le diamètre d du noyau est de 0,2 à 0,8 mm inférieur au diamètre nominal d'un perçage associé.

8. Vis selon l'une des revendications 1 à 7, **caractérisée en ce que** des entailles de coupe (10) voisines présentent un écartement périphérique f qui satisfait les relations suivantes vis-à-vis d'une extension périphérique e des entailles de coupe : e ≤ f ≤ 3 e.

9. Vis selon l'une des revendications 1 à 8, **caractérisée en ce que** la hauteur radiale h des entailles de coupe (10) est comprise entre 0,1 et 0,4 mm, et de préférence entre 0,2 et 0,3 mm.

10. Vis selon l'une des revendications 1 à 9, **caractérisée en ce que** le diamètre extérieur D du pas de vis (5) est réduit de 0,1 à 0,2 mm en direction d'une tête de vis (4) .

11. Vis selon l'une des revendications 1 à 4 et 6 à 10, **caractérisée en ce que** le diamètre extérieur D du pas de vis (5) est supérieur de 1,5 à 3,5 mm au diamètre nominal d'un perçage associé.

12. Vis selon l'une des revendications 1 à 6 et 8 à 12, **caractérisée en ce que** le diamètre du noyau d est plus petit de 0,8 à 1,6 mm que le diamètre nominal d'un perçage associé.

13. Vis selon l'une des revendications 1 à 8 et 10 à 12, **caractérisée en ce que** la hauteur radiale h des entailles de coupe (10) est comprise entre 0,2 et 0,8 mm.

14. Vis selon l'une des revendications 1 à 13, **caractérisée en ce que** les entailles de coupe (10) ont en section la forme d'un triangle isocèle.

15. Vis selon l'une des revendications 1 à 14, **caractérisée en ce que** les entailles de coupe (10) présentent un angle aigu c, tel que 50° ≤ c ≤ 90°, et de préférence tel que c ≈ 60°.

16. Vis selon l'une des revendications 1 à 15, **caractérisée en ce que** la largeur b du pas de vis (5) est comprise entre 0,4 et 1,5 mm, en particulier entre 0,4 et 1,0 mm.
